# EUROPÄISCHE PATENTSCHRIFT

(11) **EP 0 467 197 B1**
(45) Veröffentlichungstag und Bekanntmachung des Hinweises auf die Patenterteilung: **30.11.1994**
(21) Anmeldenummer: 91111389.2
(22) Anmeldetag: 09.07.1991
(51) Int. Cl.: F16B 11/00, B62D 27/02, B60N 2/00, C09J 5/02

(54) **Verfahren zum festen Verbinden von metallischen Bauteilen mit einem ebenfalls metallischen Träger**
Method for fixed connection of metallic building components to a metallic support
Procédé de connexion fixé entre des éléments de construction métalliques et un support métallique

(30) Priorität: 14.07.1990 DE 4022444
(43) Veröffentlichungstag der Anmeldung: 22.01.1992
(73) Patentinhaber: Westfalia-Werke Knöbel GmbH & Co., 33378 Rheda-Wiedenbrück (DE)
(72) Erfinder: Koglin, Klaus, W-4410 Warendorf (DE); Pöppelbaum, Adolf, W-4840 Rheda-Wiedenbrück (DE); Schmidt, Ralf, Dipl.-Ing., W-4740 Oelde (DE)
(74) Vertreter: Müller, Gerd, Dipl.-Ing.

(56) Entgegenhaltungen:
- EP-A- 0 116 279
- DE-A- 3 011 386
- DE-A- 3 151 266
- GB-A- 2 162 865

## Beschreibung

Die Erfindung betrifft ein Verfahren zum festen Verbinden von hochbelastbaren und vornehmlich langgestreckten metallischen Bauteilen mit einem ebenfalls metallischen Träger, insbesondere zum Befestigen von Anker- und/oder Führungsschienen für Einzelsitze oder Sitzbänke auf dem Boden und/oder von Halteschienen für Einbauteile an den Wänden von Fahrzeugaufbauten, deren Befestigungsstellen in erheblichem Maße Zug- und Scherkräften unterworfen sind, bei dem zwischen die einander zugewendeten Flächen von Bauteil und Träger als Verbindungsmittel ein Kleber eingebracht wird.

Bisher ist es üblich, hochbelastete und langgestreckte metallische Bauteile an einem ebenfalls metallischen Träger durch Vernietung und/oder verschraubung und/oder Verschweißung zu befestigen. Insbesondere bei der Fertigung von Fahrzeugaufbauten, wie sie bspw. bei Wohn- und Reisemobilen zum Einsatz gelangen, werden auf diese Art und Weise die Anker- und/oder Führungsschienen für Einzelsitze oder Sitzbänke auf dem Boden und/oder von Halteschienen für sonstige Einbauten an den Wänden angebracht.

Ein wesentlicher Nachteil dieser bekannten Befestigungsart liegt darin, daß jeweils eine sehr große Anzahl von Verbindungsstellen, also Vernietungen und/oder Verschraubungen und/oder Verschweißungen angebracht werden müssen. So kommt es vor, daß eine gegen Zug- und Scherkrafteinwirkung dauerhaft stabile Anbringung einer Anker- und/oder Führungsschiene für Einzelsitze oder Sitzbänke auf dem Boden von Fahrzeugaufbauten die Herstellung von bis zu hundert Nietstellen oder Verschraubungen erforderlich macht.

Agesehen davon, daß vor der eigentlichen Durchführung der Vernietung und/oder Verschraubung und/oder Verschweißung zuvor in dem zu befestigenden Bauteil sowie in dem Träger deckungsgleiche Löcher gebohrt werden müssen, die umfangreiche Vorarbeiten voraussetzen, ergibt sich im Bereich jeder einzelnen Befestigungsstelle auch noch erhöhte Korrosionsgefahr durch unerwünschtes Eindringen von Feuchtigkeit und Nässe. Auch kann Spänebildung im Bereich der Bohrlöcher die ordnungsgemäße Ausführung der Vernietungen und/oder Verschraubungen nachhaltig beeinträchtigen. Durch Schweißen treten Beschädigungen der Lack- und Grundierschicht ein.

Durch DE-A-31 51 266 ist bereits die Ausbildung einer Klebeverbindung zweier dünnwandiger Bauteile, insbesondere Blechteile vorgeschlagen, die darauf abstellt, daß die Verklebung problemlos entweder an den Rohteilen oder auch nach deren Lackierung erfolgen kann. Bei dem zum Einsatz gelangenden Kleber soll es sich dabei um einen solchen handeln, der in einem Trockenofen vor oder nach dem Lackieren ausgehärtet wird. Wird die Klebeverbindung zwischen den Rohteilen hergestellt, dann wird die Aushärtung des Klebers im Trockenofen zusammen mit der (nachträglich aufgebrachten) Lackschicht durchgeführt. Weitergehende Angaben über den zur Herstellung der Klebeverbindung eingesetzten Kleber sind in der DE-A-31 51 266 nicht gemacht.

Die Erfindung zielt nicht nur darauf ab, die Mängel der durch Vernietung und/oder Verschraubung und/oder Verschweißung bewirkten Befestigungsart für metallische Bauteile auf ebenfalls metallischen Trägern auszuräumen, sondern es liegt ihr zugleich die Aufgabe zugrunde, mit relativ geringem Arbeitsaufwand und unter Vermeidung von Korrosionsgefahr auch nachträglich noch herstellbare Klebeverbindungen anzugeben, die das feste Verbinden von hochbelasteten und langgestreckten metallischen Bauteilen mit einem ebenfalls metallischen Träger gewährleistet.

Nach der erfindungsgemäßen Verfahrensart wird dieser Aufgabe dadurch gelöst, daß zunächst Bauteil und Träger jeweils mindestens auf den mit dem Kleber zu versehenden Flächenbereichen mit einer Lackschicht und/oder einer Grundierungsschicht versehen werden, wonach dann mindestens auf die mit dem Kleber zu versehenden Flächenbereiche der Lackschicht und/oder der Grundierungsschicht von Bauteil und Träger eine diese überdeckende Primerschicht aufgebracht und erst dann zwischen die Primerschichten eine der Bildung der Klebeverbindung dienende Polyurethan-Kleberschicht gelegt wird.

Der DE-A-30 11 386 ist im Zusammenhang mit dem Bau von Fahrzeugkarosserien zwar schon der Vorschlag zu entnehmen, zur Bildung von Klebeverbindungen zwischen einem Boden und einem Blechpreßteil, und zwar insbesondere einem Boden aus Kunststoff und einem Blechpreßteil Polyurethan-Kleber zu verwenden, weil dieser nach der Aushärtung besonders hoch belastbar ist. Dieser Stand der Technik gibt aber weder eine Anregung dafür, die Klebeverbindung der Teile über zwischengeschaltete Lack- und/oder Grundierungsschichten, noch über zusätzlich zwischengeschaltete Primerschichten herzustellen.

Praktische Versuche haben ergeben, daß mit Hilfe einer solchermaßen hergestellten und/oder aufgebauten Verbindung Festigkeiten gegen die auftretenden Kraftwirkungen, insbesondere Zug- und Scherkräfte, erreicht werden können, welche den herkömmlichen Niet- und/oder Schraub- und/oder Schweißverbindungen zumindest ebenbürtig sind.

Mit der erfindungsgemäßen Verbindungsart wird nicht nur dem Auftreten von Korrosionsschäden im Bereich der Befestigungsstellen optimal entgegengewirkt. Vielmehr ergibt sich auch ein beträchtlich verminderter Montageaufwand. Darüber hinaus wird eine gleichmäßige und relativ großflächige Krafteinleitung aus dem Bauteil in den Träger herbeigeführt und auftretende Verwindungen zwischen dem Träger und dem Bauteil werden durch die Elastizität des Klebers problemlos aufgenommen.

Bewährt hat es sich nach der Erfindung in besonderem Maße, wenn mit einem - relativ dünnwandigen - Träger aus Stahlblech ein - relativ dickwandiges - Bauteil aus Leichtmetall, insbesondere Aluminium, verklebt wird.

Erfindungsgemäß hat es sich auch als zweckmäßig herausgestellt, daß zwischen Träger und Bauteil mehrere zueinander parallele Kleberbahnen eingebracht werden, wenn das langgestreckte metallische Bauteil eine relativ große Konstruktionsbreite hat. Es kann sich dabei in Weiterbildung des Erfindungsgedankens als zweckmäßig erweisen, wenn die Breite der Kleberbahnen kleiner eingestellt wird als der Abstand zwischen benachbarten Kleberbahnen.

Als empfehlenswert hat sich aber auch herausgestellt, wenn Träger oder Bauteil an der jeweiligen Verbindungsfläche mit einer Wellen-, Sicken- und/oder Rippenstruktur versehen und dabei jeweils lediglich entlang der aufeinandertreffenden Berührungsflächen mit einer Kleberbahn versehen werden.

Eine erfindungsgemäße Festverbindung zwischen hochbelastbaren und vornehmlich langgestreckten metallischen Bauteilen und einem ebenfalls metallischen Träger wird durch die Merkmale des Anspruchs 6 beschrieben.

Weitere Merkmale und Vorteile der Erfindung werden anschließend anhand eines in der Zeichnung dargestellten Ausführungsbeispiels erläutert. Es zeigen
- Figur 1: im Querschnitt ein auf einem metallischen, wellenförmig profilierten Träger (Boden) sitzendes und daran an mehreren Verbindungsstellen festgelegtes metallisches Bauteil,
- Figur 2: ebenfalls im Querschnitt ein auf einem eben verlaufenden, metallischen Träger (Boden) sitzendes und daran an mehreren Verbindungsstellen festgelegtes metallisches Bauteil, und
- Figur 3: in größerem Maßstab einen Schnitt entlang der Linie III-III der Figuren 1 und 2 durch eine der Verbindungsstellen zwischen dem metallischen Bauteil und dem metallischen Träger.

Auf verschiedenen Gebieten der Technik besteht die Notwendigkeit, hochbelastete und vornehmlich langgestreckte metallische Bauteile 2 fest mit einem ebenfalls metallischen Träger 1 zu verbinden. So ist es bei der Herstellung von Fahrzeugaufbauten, bspw. für Wohn- und Reisemobile in der Regel nötig, zumindest auf dem Boden 1 des Fahrzeugaufbaus Anker- und/oder Führungsschienen zu befestigen, wie sie insbesondere zur verstellbaren Halterung und/oder Festlegung von Einzelsitzen oder Sitzbänken benötigt werden.

Auch kommt es vor, daß an den Wänden solcher Fahrzeugaufbauten Halteschienen für andere Einbauteile befestigt werden müssen.

Wesentliches Kriterium in allen Fällen ist dabei, daß die Befestigungsstellen zwischen den metallischen Bauteilen und den metallischen Trägern in erheblichem Maße Zug- und Scherkräften unterworfen sind, und daß diese Kraftwirkungen von den Befestigungsstellen dauerhaft sicher aufgenommen werden müssen.

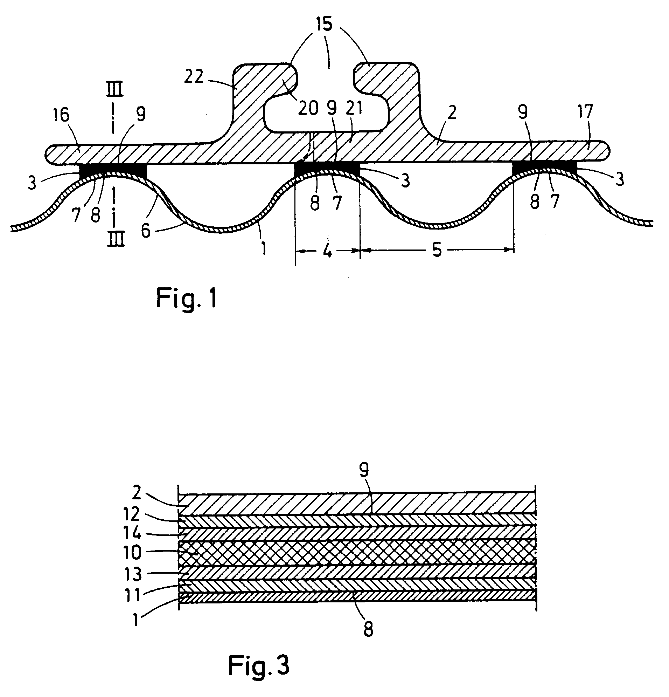

In Fig. 1 der Zeichnung ist zu sehen, daß zwischen der hochbelasteten und langgestreckten, metallischen Anker- und/oder Führungsschiene 2 und dem metallischen Boden 1 eines Fahrzeugaufbaus eine oder mehrere, bspw. drei, feste Verbindungsstellen 3 vorhanden sind. Diese Verbindungsstellen 3 liegen dabei auf mehreren zueinander parallelen, jeweils in Längsrichtung der Anker- und/oder Führungsschiene 2 verlaufenden Bahnen. Dabei hat es sich bewährt, wenn die Breite 4 der einzelnen Bahnen kleiner eingestellt wird, als der Abstand 5 zwischen zwei benachbarten Bahnen.

Ebenfalls hat es sich bewährt, zumindest den den Träger bildenden Boden 1 mit einer Wellen-, Sicken- und/oder Rippenstruktur 6 auszustatten, deren Profil sich im wesentlichen quer zur Längsrichtung der Anker- und/oder Trägerschiene 2 erstreckt. Die in Form von Bahnen vorgesehenen Verbindungsstellen 3 zwischen dem Boden 1 sowie der Anker- und/oder Führungsschiene 2 befinden sich dabei jeweils lediglich zwischen einem erhabenen Bereich 7 der Wellen-, Sicken- und/oder Rippenstruktur 6 und dem diesem zugewendeten Flächenbereich der Anker-und/oder Führungsschiene 2, wie das deutlich aus Fig. 1 hervorgeht.

Jede der Verbindungsstellen 3 sollte sich mit der ihr vorgegebenen Breite 4 ununterbrochen über die ganze Länge der mit dem Boden 1 in Verbindung zu bringenden Anker- und/oder Führungsschiene 2 erstrecken. In vielen Fällen ist es aber auch möglich, Verbindungsstellen 3 mit Unterbrechungen vorzusehen.

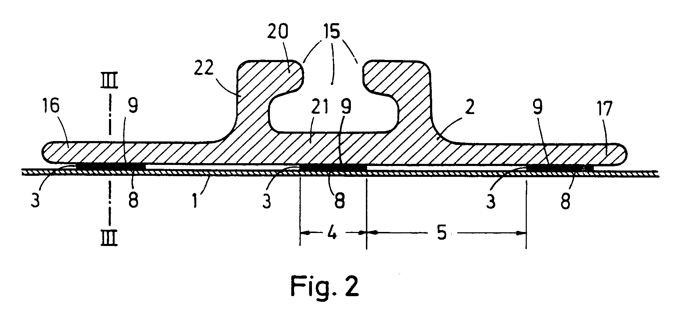

Zur Bildung der Verbindungsstellen 3 zwischen den einander zugewendeten Flächen 8 und 9 vom Boden 1 sowie Anker- und/oder Führungsschiene 2 wird gemäß Fig. 2 eine Schicht 10 aus einem Polyurethan-Kleber benutzt.

Diese Schicht 10 aus Polyurethan-Kleber wird dabei jedoch nicht unmittelbar auf die Flächen 8 und 9 vom Boden 1 sowie Anker- und/oder Führungsschiene 2 aufgebracht. Vielmehr werden die Flächen 8 und 9 vom Boden 1 sowie von Anker- und/oder Führungsschiene 2 zumindest jeweils in den mit der Kleberschicht 10 auszustattenden Flächenbereichen zuvor mit einer Lackschicht 11 oder einer Grundierungsschicht 12 ausgestattet und diese wird wiederum jeweils mit einer Primerschicht 13 bzw. 14 belegt. Erst zwischen die beiden Primerschichten 13 und 14 wird sodann die Polyurethan-Kleberschicht 10 eingebracht.

Durchgeführte Beanspruchungsversuche haben ergeben, daß die im vorstehend beschriebenen Sinne angeordneten und ausgebauten Verbindungsstellen 3 zwischen dem Boden 1 sowie den Anker- und/oder Führungsschienen 2 gegen die im praktischen Einsatz auftretenden Zug- und Scherkräfte zumindest ebenso widerstandsfähig sind, wie die herkömmlichen Niet-, Schraub- und Schweißverbindungen. Da jedoch die Verbindungsstellen 3 ohne Befestigungslöcher im Boden 1 sowie in den Anker- und/oder Führungsschienen 2 auskommen, können dort keine Korrosionsschäden auftreten und es ergibt sich auch nur ein geringer Montageaufwand. Die praktisch ununterbrochen über die ganze Länge der Anker-und/oder Führungsschienen 2 verlaufenden Verbindungsstellen 3 gewährleisten eine gleichmäßige Krafteinleitung in den Boden 1, wobei auftretende Verwindungen des Bodens 1 problemlos durch die Elastizität der Kleberschicht 10 aufgenommen werden können.

Aus Fig. 1 geht hervor, daß der Boden 1 eines Fahrzeugaufbaus vorzugsweise eine etwa sinuswellenförmige Struktur erhalten kann, während die darauf sitzende Ankerund/oder Führungsschiene 2 ein im Querschnitt etwa C-förmiges, nach oben offenes Profil-Mittelstück 15 aufweist, an das sich zwei flache Seitenflansche 16 und 17 einstückig fest anschließen.

Sowohl im Bereich des Profil-Mittelstücks 15 als auch im Bereich jedes der beiden Seitenflansche 16 und 17 ist zwischen der Anker- und/oder Führungsschiene 2 sowie dem Boden 1 eine auf längsverlaufenden Bahnen liegende Verbindungsstelle 3 vorgesehen bzw. gebildet.

Während der Boden 1 des Fahrzeugaufbaus aus - relativ dünnwandigem - Stahlblech bestehen kann, ist die Anker- und/oder Führungsschiene 2 aus - relativ dickwandigem - Leichtmetall, insbesondere Aluminium, gefertigt.

Wenn der metallische Boden 1 eines Fahrzeugaufbaus aus Stahlblech und die darauf zu befestigende, metallische Anker- und/oder Führungsschiene 2 aus einer Leichtmetall-Legierung, nämlich AlMgSi-Legierung, besteht, dann können, wie erfolgreich durchgeführte Versuche ergeben haben, zur Bildung der Verbindungsstellen 3 als Zwischenschichten 10 bis 14 folgende Materialien zum Einsatz gelangen:
Bei der Polyurethan-Kleberschicht 10 handelt es sich um einen Zweikomponenten-Kleber, welcher unter dem Handelsnamen "BETAMATE E 2400" erhältlich ist.

Als Lackschicht 11 war auf dem Stahlblech 1 ein bei der Volkswagen AG verwendeter Serienlack vorgsehen.

Bei der Grundierungsschicht 12 auf der Anker- und/oder Führungsschiene 2 handelte es sich um eine Zweikomponenten-Grundierung der Firma Müller, Wuppertal, deren eine Komponente aus einem PUR-Füller 620/8, weiß und deren andere Komponente aus einem Härter 7209 besteht.

Für die Bildung der beiden Primer-Schichten 13 und 14 wurde ein unter dem Handelsnamen "BETAPRIME 5402" erhältliches Material eingesetzt.

Die Produkte mit den Handelsnamen "BETAMATE E 2400" und "BETAPRIME 5402" werden von der Firma Gurit-Essex in den Handel gebracht.

## Patentansprüche

1. Verfahren zum festen Verbinden von hochbelastbaren und vornehmlich langgestreckten metallischen Bauteilen (2) mit einem ebenfalls metallischen Träger (1), insbesondere zum Befestigen von Anker- und/oder Führungsschienen (2) für Einzelsitze oder Sitzbänke auf dem Boden (1) und/oder von Halteschienen für Einbauteile an den Wänden von Fahrzeugaufbauten, deren Befestigungsstellen (3) in erheblichem Maße Zug- und Scherkräften unterworfen sind, bei dem zwischen die einander zugewendeten Flächen von Bauteil (2) und Träger (1) ein Kleber (10) eingebracht wird,
**dadurch gekennzeichnet,**
daß zunächst Bauteil (2) und Träger (1) jeweils mindestens auf den mit dem Kleber (10) zu versehenden Flächenbereichen (8, 9) mit einer Lackschicht (11) und/oder einer Grundierungsschicht (12) versehen werden, wonach dann mindestens auf die mit dem Kleber (10) zu versehenden Flächenbereiche (8, 9) der Lackschicht (11) und/oder der Grundierungsschicht (12) von Bauteil (2) und Träger (1) eine diese überdeckende Primerschicht (13, 14) aufgebracht und erst dann zwischen die Primerschichten (13 und 14) eine der Bildung der Klebeverbindung dienende Polyurethan-Kleberschicht (10) gelegt wird.

2. Verfahren nach Anspruch 1,
**dadurch gekennzeichnet,**
daß mit dem - relativ dünnwandigen - Träger (1) aus Stahlblech ein - relativ dickwandiges - Bauteil (2) aus Leichtmetall, insbesondere aus Aluminium, verklebt wird (10 bis 14).

3. Verfahren nach einem der Ansprüche 1 und 2,
**dadurch gekennzeichnet,**
daß zwischen Träger (1) und Bauteil (2) mehrere zueinander parallele Kleberbahnen (3) eingebracht werden.

4. Verfahren nach einem der Ansprüche 1 bis 3,
**dadurch gekennzeichnet,**
daß die Breite (4) der Kleberbahnen (3) kleiner als der Abstand (5) zwischen benachbarten Kleberbahnen (3) eingestellt wird.

5. Verfahren nach einem der Ansprüche 1 bis 4,
**dadurch gekennzeichnet,**
daß Träger (1) oder Bauteil (2) an der Verbindungsfläche (8 bzw. 9) mit einer Wellen-, Sicken- und/oder Rippenstruktur (6) versehen und dabei jeweils lediglich entlang der aufeinandertreffenden Berührungsflächen (7, 8, 9) mit einer Kleberbahn (3) versehen werden.

6. Festverbindung für hochbelastbare und vornehmlich langgestreckte metallische Bauteile (2) mit einem ebenfalls metallischen Träger (1), insbesondere für Anker- und/oder Führungsschienen (2) von Einzelsitzen oder Sitzbänken auf dem Boden (1) und/oder für Halteschienen von Einbauteilen an den Wänden von Fahrzeugaufbauten, wobei die Befestigungsstellen (3) in erheblichem Maße Zug- und Scherkräften unterworfen sind, bei dem zwischen die einander zugewendeten Flächen von Bauteil (2) und Träger (1) ein Kleber (10) eingebracht ist,
**dadurch gekennzeichnet,**
daß eine Lackschicht (11) sich auf dem Träger (1) befindet und eine weitere Beschichtung aus Primer (13) trägt, während eine auf dem Bauteil (2) aufgebrachte - ausgehärtete - Grundierungsschicht (12) ebenfalls mit einer weiteren Primer-Beschichtung (14) versehen ist, und daß zwischen die einander zugewendeten Primer-Beschichtungen (13 und 14) eine Schicht aus PolyurethanKleber (10) gelegt ist.

7. Festverbindung nach Anspruch 6,
**dadurch gekennzeichnet,**
daß je eine entlang einer längsgerichteten Bahn verlaufende Verbindungsstelle (3) zwischen einem Profil-Mittelstück (15) sowie zwei Seitenflanschen (16 und 17) einer Anker- und/oder Trägerschiene (2) sowie dem Boden (1) eines Fahrzeug-Aufbaus vorgesehen ist.

## Claims

1. A method of firmly connecting metallic components (2) which may be heavily loaded and especially are elongated, to a likewise metallic carrier (1), being a method in particular of fastening anchor- and/or guide-rails (2) for single seats or bench seats to the floor (1) and/or supporting rails for mounting parts to the walls of vehicle bodies, the points (3) of fastening of which are subjected to a considerable degree to tensile and shear forces, in which a glue (10) is introduced between areas facing one another on a component (2) and a carrier (1),
**characterized in that**
first of all the component (2) and carrier (1), at least on those regions (8, 9) of their surfaces which are to be provided with the glue (10), are provided with a layer (11) of varnish and/or a layer (12) of filler on each, after which there is applied at least to those regions (8, 9) of the surfaces of the layer (11) of varnish and/or the layer (12) of filler on the component (2) and carrier (1), which are to be provided with the glue (10), a layer (13, 14) of primer covering them and only then is there laid between the layers (13 and 14) of Primer a layer (10) of polyurethane glue serving to form the glued connection.

2. A method as in Claim 1,
**characterized in that**
a - relatively thickwalled - component (2) of light metal, especially aluminium, is glued (10 to 14) to the - relatively thinwalled - sheet-steel carrier (1).

3. A method as in one of the Claims 1 and 2,
**characterized in that**
a number of tracks (3) of glue, parallel with one another, are introduced between the carrier (1) and the component (2).

4. A method as in one of the Claims 1 to 3,
**characterized in that**
the width (4) of the tracks (3) of glue is less than the distance (5) between adjacent tracks (3) of glue.

5. A method as in one of the Claims 1 to 4,
**characterized in that**
at the area (8 or 9) of connection the carrier (1) or component (2) is provided with a corrugated, beaded or ribbed structure (6) and in that case is merely provided with one track (3) of glue along each of the areas (7, 8, 9) of contact where they meet one another.

6. A firm connection for metallic components (2) which may be heavily loaded and especially are elongated, to a likewise metallic carrier (1), in particular for fastening anchor- and/or guide-rails (2) for single seats or bench seats to the floor (1) and/or supporting rails for mounting parts to the walls of vehicle bodies, where the points (3) of fastening are subjected to a considerable degree to tensile and shear forces, in which a glue (10) is introduced between areas facing one another on a component (2) and a carrier (1),
**characterized in that**
on the carrier (1) there is a layer (11) of varnish which carries a further coating of primer (13), whilst a - hardened - layer (12) of filler applied to the component (2) is likewise provided with a further coating (14) of primer, and that a layer of polyurethane glue (10) is laid between the coatings (13 and 14) of primer facing one another.

7. A firm connection as in Claim 6,
**characterized in that**
respective points (3) of connection are provided, running along lengthwise directed tracks, between a profiled central piece (15) as well as two sideflanges (16 and 17) of an anchor- and/or carrier-rail (2), and the floor (1) of a vehicle body.

## Revendications

1. Procédé pour connecter fermement des éléments de construction métalliques (2) à haute capacité de charge et essentiellement allongés à un support également métallique (1), en particulier pour la fixation de rails d'armature et/ou de guidage (2) pour des sièges individuels ou des bancs sur le plancher (1) et/ou pour la fixation de rails de retenue pour des composants sur les parois de superstructures de véhicules automobiles, dont les points de fixation (3) sont soumis dans une mesure considérable à des forces de traction et de cisaillement, dans lequel on introduit une colle (10) entre les surfaces orientées les unes vers les autres de l'élément de construction (2) et du support (1),
caractérisé en ce que
l'on pourvoit d'abord l'élément de construction (2) et le support (1) respectivement, d'une couche de peinture (11) et/ou d'une couche d'apprêt (12), au moins sur les régions de surfaces (8, 9) qui sont à pourvoir de la colle (10), suite à quoi on applique une couche primaire (13, 14) qui recouvre au moins les régions de surface (8,9) de la couche de peinture (11) et/ou de la couche d'apprêt (12) de l'élément de construction (2) et du support (1) qui sont à pourvoir de la colle (10), et uniquement après ceci on dépose entre les couches primaires (13 et 14) une couche de colle au polyuréthane (10) servant à la formation de la connexion collée.

2. Procédé selon la revendication 1,
caractérisé en ce que le support (1) en une tôle d'acier, ayant une paroi relativement mince, est collé (10 à 14) avec un élément de construction (2) en métal léger, en particulier de l'aluminium, ayant une paroi relativement épaisse.

3. Procédé selon l'une ou l'autre des revendications 1 et 2,
caractérisé en ce que l'on dépose entre le support (1) et l'élément de construction (2) plusieurs bandes de colle (3) parallèles les unes aux autres.

4. Procédé selon l'une quelconque des revendications 1 à 3,
caractérisé en ce que la largeur (4) des bandes de colle (3) est choisie inférieure à la distance (5) entre des bandes de colle voisines (3).

5. Procédé selon l'une quelconque des revendications 1 à 4,
caractérisé en ce que le support (1) ou l'élément de construction (2) est pourvu sur la surface de connexion (8 ou 9) d'une structure ondulée, moulurée et/ou nervurée (6), et en ce qu'ils sont respectivement pourvus d'une bande de colle (3) uniquement le long des surfaces de contact qui se touchent (7, 8, 9).

6. Connexion fixe entre des éléments de construction métalliques (2) à haute capacité de charge et essentiellement allongés et un support également métallique (1), en particulier pour la fixation de rails d'armature et/ou de guidage (2) pour des sièges individuels ou des bancs sur le plancher (1) et/ou pour la fixation de rails de retenue pour des composants sur les parois de superstructures de véhicules automobiles, dont les points de fixation (3) sont soumis dans une mesure considérable à des forces de traction et de cisaillement, dans laquelle une colle (10) est déposée entre les surfaces orientées les unes vers les autres de l'élément de construction (2) et du support (1),
caractérisée en ce qu'une couche de peinture (11) se trouve sur le support (1) et porte une autre couche primaire (13), tandis qu'une couche d'apprêt (12) durcie appliquée sur l'élément de construction (2) est également pourvue d'une autre couche primaire (14), et en ce qu'une couche de colle au polyuréthanne (10) est déposée entre les couches primaires (13 et 14) orientées l'une vers l'autre.

7. Connexion fixe selon la revendication 6,
caractérisée en ce qu'un point de connexion (3) respectif s'étendant le long d'une bande longitudinale est prévu entre un élément médian profilé (15) et le plancher (1) d'une superstructure de véhicule automobile, et entre celui-ci et deux brides latérales (16 et 17) d'un rail d'armature et/ou de guidage (2).
